(19) **Europäisches Patentamt**

**European Patent Office**

**Office européen des brevets**

(11) **EP 1 297 019 B1**

(12) **FASCICULE DE BREVET EUROPEEN**

(45) Date de publication et mention
de la délivrance du brevet:
**02.08.2006 Bulletin 2006/31**

(51) Int Cl.:
**C08B 31/12** (2006.01)          **D21H 17/28** (2006.01)
**C02F 1/56** (2006.01)

(21) Numéro de dépôt: **01943595.7**

(22) Date de dépôt: **11.06.2001**

(86) Numéro de dépôt international:
**PCT/FR2001/001801**

(87) Numéro de publication internationale:
**WO 2001/096403 (20.12.2001 Gazette 2001/51)**

(54) **UTILISATION PAPETIERE ET NON PAPETIERE D'UNE COMPOSITION AMYLACEE CONTENANT UNE MATIERE AMYLACEE CATIONIQUE SELECTIONNEE**

ANWENDUNG IN DER PAPIERINDUSTRIE UND ANDEREN INDUSTRIEN EINER STÄRKEHALTIGEN ZUSAMMENSETZUNG AUF BASIS EINER SELEKTIVEN KATIONISCHEN STÄRKE

PAPER-MAKING OR NON PAPER-MAKING USE OF A STARCHY COMPOSITION CONTAINING A SELECTED CATIONIC STARCH MATERIAL

(84) Etats contractants désignés:
**AT BE CH CY DE DK ES FI FR GB GR IE IT LI LU MC NL PT SE TR**

(30) Priorité: **13.06.2000 FR 0007533**

(43) Date de publication de la demande:
**02.04.2003 Bulletin 2003/14**

(73) Titulaire: **Roquette Frères**
**62136 Lestrem (FR)**

(72) Inventeurs:
• **MERLE DU BOURG**
**F-59700 Marq en Baroeul (FR)**
• **LADRET, Marika**
**F-59840 Lompret (FR)**
• **LAMBIN, Anne**
**F-59160 Lomme (FR)**
• **COUDEVYLLE, Jean-Luc**
**F-59320 Emmerin (FR)**
• **DOBROGOSZCZ, Edmond**
**F-62980 Vermelles (FR)**

(74) Mandataire: **Boulinguiez, Didier**
**Cabinet Plasseraud**
**65/67 rue de la Victoire**
**75440 Paris Cedex 09 (FR)**

(56) Documents cités:
**BE-A- 626 712          FR-A- 2 100 125**
**FR-A- 2 434 821**

• **PATENT ABSTRACTS OF JAPAN vol. 1999, no. 04, 30 avril 1999 (1999-04-30) & JP 11 012979 A (SEIKO KAGAKU KOGYO CO LTD), 19 janvier 1999 (1999-01-19) cité dans la demande & DATABASE WPI Week 199914 Derwent Publications Ltd., London, GB; AN 156595**
• **DATABASE WPI Week 197425 Derwent Publications Ltd., London, GB; AN 1974-10028V XP002161931 SUZUKI OSAMU ET AL.: "Cationic starch of low molecular weight and low viscosity" & JP 48 069885 A (HOHNEN OIL KK), 21 septembre 1973 (1973-09-21) & CHEMICAL ABSTRACTS, vol. 80, no. 22, 3 juin 1974 (1974-06-03) Columbus, Ohio, US; abstract no. 122662,**

**Description**

La présente invention a pour objet l'utilisation, comme additif de papeterie autre qu'un additif de masse classique ou comme additif de traitement des eaux industrielles, d'une composition amylacée contenant une matière amylacée cationique présentant des caractéristiques particulières de taux d'azote fixé et de viscosité.

Elle vise, en tant que produit industriel une composition amylacée du genre en question dont la matière amylacée cationique est sélectionnée de manière telle que ladite composition est également utilisable, entre autres, comme additif de masse classique.

Par « additif de masse classique» au sens de la présente invention, on entend toute composition utilisée spécifiquement :

- en partie humide (« wet end ») de la machine à papier, et
- en vue d'améliorer et apte à améliorer, seule et directement, la rétention des fibres et/ou charges, l'égouttage et les caractéristiques physiques du papier.

L'utilisation classique d'amidons cationiques comme additifs de masse est décrite, par exemple, dans les brevets BE 626.712, EP 139.597, EP 603.727, WO 97/46591, JP-A-48 069885 et JP-A-11 012979.

De manière courante, l'additif classique de masse est mis en oeuvre au plus tôt au niveau de l'enceinte connue de l'homme de l'art sous la dénomination de « cuvier machine » (« machine chest ») et au plus tard à un niveau situé juste avant l'enceinte connue de l'homme de l'art sous la dénomination de « caisse de tête » (« headbox ») de la machine à papier proprement dite.

De manière très classique, l'additif de masse est mis en oeuvre au sein d'une composition fibreuse de pâte dite diluée, dont la concentration en matières en suspension est généralement au plus égale à 20 g/l.

Par « additif de papeterie autre qu'un additif classique de masse », on entend toute composition susceptible d'être utilisée dans l'une, au moins, des applications papetières autres que celle spécifique précitée d'additif classique de masse et/ou d'être utilisée à, au moins, un niveau autre que les niveaux d'introduction précités d'un additif classique de masse.

L'additif de papeterie autre qu'un additif classique de masse peut notamment être mis en oeuvre :

- au niveau du cuvier machine ou en amont de celui-ci, par exemple au niveau de l'une quelconque des enceintes connues de l'homme de l'art sous les dénominations de « pulpeur » (« pulper ») « cuvier mélange » (« mixing chest»), « cuvier cassés » (« broke chest »), voire dès la sortie de l'usine à pâte, et/ou
- au niveau même des équipements de formation de feuille proprement dite et/ou
- en aval de ces dispositifs de formation de feuille, notamment au niveau des dispositifs de crêpage, surfaçage,

ou couchage, ou plus généralement de tout dispositif de traitement, par exemple de pulvérisation ou d'enduction, d'une feuille dont la teneur en eau est, avant traitement, inférieure à 60 % environ, et/ou

- au niveau de la préparation de compositions d'additifs papetiers contenant des matières actives de nature non amylacée.

Par « additif de papeterie autre qu'un additif de masse classique » au sens de la présente invention, on entend en particulier toute composition se présentant sous forme solide, liquide ou pâteuse, par exemple sous la forme d'une poudre s'écoulant librement, d'une dispersion aqueuse, d'une émulsion ou d'une solution colloïdale, et utile en tant qu'agent de réduction des substances gênantes, notamment de nature anionique, contenues dans les circuits d'eau et/ou retenues sur les équipements des procédés papetiers.

On entend également, entre autres, toute composition utile dans la préparation des compositions d'agents de collage utilisées en papeterie, notamment en tant qu'agent de protection desdits agents.

Par « additif de traitement des eaux industrielles » au sens de la présente invention, on entend notamment toute composition utile, en particulier, comme agent de clarification et/ou de purification des eaux issues des activités humaines ou industrielles ou destinées aux dites activités, telles que par exemple les eaux destinées à l'alimentation humaine ou animale, les rejets des industries du textile et du cuir, du papier et du carton, d'extraction des minerais, des industries agro-alimentaires et des abattoirs.

Dans l'ensemble des domaines d'application précités autres que le domaine des additifs de masse, il est fait appel couramment à des compositions à base de polymères d'origine naturelle ou synthétique, en particulier de nature cationique. Ceux-ci peuvent notamment consister en des matières amylacées cationiques comme décrit récemment dans :

- les brevets EP 626.022 et CA 2.160.103 concernant leur utilisation en tant qu'agents de réduction des substances gênantes, notamment anioniques, contenues dans les circuits papetiers.
- les brevets WO 97/35068 et WO 99/18288 concernant leur utilisation en tant qu'agents de protection des compositions de collage utilisées en papeterie, et
- les brevets US 5.543.056 et US 5.236.598 concernant leur utilisation en tant qu'additifs de traitement des eaux industrielles.

Le brevet EP 626.022 revendique l'usage, en tant qu'agent de réduction des substances gênantes dans les circuits d'eau papetiers, d'amidons cationiques présentant une densité de charge obligatoirement très élevée, à savoir de 1,5 à 3,5 meqv/g, et de préférence de 2 à 3 meqv/g. Ces gammes correspondent à des amidons cationiques présentant un taux d'azote total d'environ 2,1 à 4,9 %, de préférence d'environ 2,8 à 4,2 % (sec/sec). Le procédé de préparation des amidons cationiques utilisés à cette fin dans les exemples de ce brevet n'est aucunement décrit, y compris l'origine botanique des amidons testés.

Compte tenu cependant du niveau de cationicité requis, il apparaît clairement qu'au stade industriel, de tels amidons cationiques ne peuvent raisonnablement être préparés qu'en phase colle comme décrit, par exemple, dans la demande de brevet WO 95/18157 publiée au nom du même déposant.

Les exemples de ce document envisagent la préparation de colles de fécules de pomme de terre hautement cationiques, caractérisées par un degré de substitution (« DS ») de 0,72 et 0,75 et ce, à partir de milieux réactionnels très concentrés, caractérisés par une matière sèche (« MS ») supérieure à 50 %, dont la moitié environ est apportée par le seul réactif de cationisation (« Raisicat 65 »).

La préparation même de telles compositions hautement cationiques et hautement concentrées implique d'ailleurs, selon lesdits exemples, une étape préalable d'oxydation de la fécule de pomme de terre par du peroxyde d'hydrogène.

Cependant, tant de manière intrinsèque qu'au niveau applicatif, de telles colles présentent un certain nombre d'inconvénients.

En premier lieu, et comme le confirment des analyses faites par la Demanderesse sur des produits commercialisés sous la dénomination « RAIFIX » par le titulaire des brevets EP 626.022 et WO 95/18157 susmentionnés, ces colles hautement cationiques présentent un taux de fixation de l'azote relativement bas, généralement inférieur à 65 %. Il en résulte notamment une quantité résiduelle élevée de réactif cationique et/ou de ses produits d'hydrolyse au sein même de telles compositions, ce qui nuit à leur efficacité réelle en tant qu'agents d'élimination des substances gênantes, notamment anioniques, présentes dans les circuits papetiers.

Par ailleurs, cette fixation très partielle du réactif cationique azoté rend difficilement envisageable l'utilisation de ces colles comme additifs de traitement des eaux industrielles, en particulier des eaux destinées à l'alimentation humaine ou animale.

En outre, le pH élevé de ces colles, généralement supérieur à 9, peut poser des problèmes de sécurité et de corrosion inhérents à la préparation, à la manipulation et à l'utilisation de produits alcalins.

Enfin, les caractéristiques intrinsèques de ces colles font qu'elles sont généralement mal adaptées :

- du fait de leur viscosité relativement élevée, aux opérations de dilution puis d'introduction dans un milieu aqueux, ceci pouvant se traduire par des baisses ou des irrégularités d'efficacité de ces colles mais également, par voie de conséquence, des amidons (essentiellement cationiques) utilisés par ailleurs dans la masse des fibres papetières, et/ou
- du fait de leur hydrophilie élevée, aux opérations de séchage ou de prégélatinisation en vue d'obtenir des poudres ou des paillettes, puis de réhydratation desdites poudres ou paillettes.

Ces inconvénients sont d'ailleurs amplifiés pour des bases amylacées d'origine céréalière (maïs, blé notamment), la préparation ou l'utilisation de telles bases sous forme cationique n'étant aucunement exemplifiée dans les brevets EP 626.022 et WO 95/18157 précités.

Il en est d'ailleurs de même dans le brevet WO 99/18288 au nom du même déposant, qui revendique l'utilisation d'amidons également à hauts niveaux de cationicité (DS compris entre 0,15 et 1,30, de préférence entre 0,50 et 0,80), dans la préparation d'émulsions de colophane destinées au collage du papier. Il y est indiqué que le taux d'azote total de ces amidons cationiques est préférentiellement de 3 à 5 % et idéalement de 3,5 %, de tels produits pouvant avantageusement être obtenus directement selon le procédé décrit dans le brevet WO 95/18157 précité.

Seules, des fécules de pomme de terre présentant un taux d'azote total de 3,5 % sont exemplifiées dans ce document.

Dans le même domaine d'application, i.e la préparation de compositions d'agent de collage, le brevet WO 97/35068 préconise également la mise en oeuvre d'amidons hautement cationiques présentant simultanément :

- un DS supérieur à 0,1, de préférence compris entre 0,4 et 1,0, et

- une densité de charge comprise entre 0,5 et 3,5 meqv/g, de préférence comprise entre 1,0 et 2,0 meqv/g.

Ainsi, le produit cationique utilisé sous forme dégradée et liquide dans les exemples de ce brevet présente un DS de 0,48 (soit un taux d'azote fixé théorique de 2,7 - 2,8 % environ) et une densité de charge de 1,32 meqv/g. La nature botanique et les conditions de préparation, notamment de dégradation, ne sont cependant pas précisées.

La demande de brevet japonais JP-A-11 012979, quant à elle, illustre et décrit l'utilisation, comme additif classique de papeterie de masse exclusivement, d'un amidon cationique, traité par une alpha amylase, se présentant sous la forme d'une composition à 15% de matière sèche, dont la viscosité se situe entre 5 et 500 centipoises (ou mPa.s), mesurée à 25°C.

De même, si la partie descriptive de la demande de brevet japonais JP-A-48 069885 est exempte de toute précision quant à l'exploitation d'un produit issu du procédé de l'invention, la table 2, relative aux exemples est parfaitement explicite quant à l'usage précis de la composition comme additif classique de masse.

Ladite demande ne pose, ni ne traite le problème technique posé par les additifs de papeterie autres que les additifs classiques de masse, et n'en propose pas, *a fortiori,* de résolution.

La demande de brevet belge BE 626712 décrit l'utilisation d'amidons cationiques granulaires, de degré de substitution (DS) peu élevé, et susceptibles de développer une viscosité réduite comme « agents floculants » utilisés en papeterie de masse classique.

Dans cette application, les amidons cationiques en question permettent, classiquement, une rétention élevée des charges et des pigments utilisés dans la fabrication du papier, et augmentent les propriétés de résistance du papier.

Ainsi, ces derniers documents de l'art antérieur, constitués par les demandes de brevet, japonaises JP-A-11 012979 et JP-A-48 069885, et belge BE-A-626712 ne considèrent pas les contextes papetiers d'utilisation d'amidons cationiques autres que ceux d'additifs classiques de masse et ne traitent pas, en conséquence, les problèmes techniques afférents.

Dans le domaine du traitement des eaux industrielles, il a été proposé récemment dans le brevet US 5.236.598, d'avoir recours à des amidons cationiques dont le DS se situe préférentiellement entre 0,01 et 0,2, c'est-à-dire significativement en deça de ceux revendiqués dans les brevets précités. Cependant, de tels amidons cationiques doivent être associés obligatoirement à des polyacrylamides hydrolysés pour être efficaces dans l'application considérée (traitement de rejets de peintures). En outre, les auteurs exemplifient uniquement une fécule de pomme de terre cationique non dégradée, en l'occurrence le produit HI-CAT® 142 commercialisé par la Demanderesse, en association avec un polyacrylamide du fait que, selon leurs affirmations :

1) les bases amylacées autres que la fécule de pomme de terre, notamment l'amidon de maïs, ne sont pas adaptées (cf colonne 4, 1. 62-66), et

2) le poids moléculaire de la fécule cationique n'est pas un paramètre critique (cf colonne 4, 1. 44-45).

Dans le domaine particulier du traitement de l'eau potable, il a été également préconisé récemment d'associer, au sein de mélanges, un coagulant dit primaire tel que le chitosane ou un amidon cationique à une argile, cette dernière étant présente en proportions importantes dans lesdits mélanges.

La charge cationique des coagulants primaires testés, notamment des amidons cationiques, n'est pas expressément mentionnée. Il est rappelé cependant que le chitosane présente une haute densité de charge (cf colonne 5, 1. 41-45). Aucune référence n'est par ailleurs faite à la dégradation éventuelle du coagulant primaire, notamment d'un amidon cationique, en vue de son utilisation.

Par contre, les auteurs privilégient là encore les amidons cationiques base fécule de pomme de terre, seuls amidons cationiques exemplifiés.

La demande de brevet belge BE 626712, quant à elle, précise déjà, dans son examen de l'art antérieur en termes de pouvoir floculant vis-à-vis des minerais, que les solutions apportées ne s'appuyaient jusque là que sur le principe d'une activité floculante fonction du degré de substitution.

Elle prétend, à l'inverse, que le degré de substitution n'est pas critique et que ladite activité est essentiellement liée à une viscosité dite « critique », mais appartenant, de fait, à un domaine relativement large.

Parallèlement, elle se satisfait de DS faibles, puisque inférieurs à 0,05.

Il résulte de ce qui précède qu'il n'existe pas à ce jour un moyen qui présente simultanément les avantages de pouvoir être :

- utilisé efficacement comme agent de réduction des substances gênantes, notamment anioniques, contenues dans les circuits d'eau papetiers et/ou retenues sur les équipements de procédés papetiers, et, si possible, plus généralement comme additif papetier autre qu'un additif de masse classique,

- utilisé efficacement comme additif de traitement des eaux industrielles,

- éventuellement utilisé dans d'autres domaines, y compris la papeterie de masse,
- utilisé sous forme de colles, diluées ou non, de suspensions aqueuses ou de formes solides telles que poudres ou paillettes,
- obtenu à partir de toutes bases amylacées, y compris des céréales, et
- obtenu, de manière simple et peu coûteuse, par des procédés classiques de transformation, notamment de cationisation, des matières amylacées.

Et le mérite de la Société Demanderesse est d'avoir trouvé, après de nombreuses recherches, qu'un tel moyen pouvait consister en une composition amylacée présentant des caractéristiques sélectionnées tant en termes de taux d'azote fixé que de viscosité.

De façon plus précise, la présente invention a pour objet l'utilisation, comme additif de papeterie autre qu'un additif de masse classique ou comme additif de traitement des eaux, d'une composition amylacée contenant au moins une matière amylacée cationique, caractérisée en ce que ladite composition présente :

- un taux d'azote fixé au plus égal à 2% , de préférence compris entre 0,1 et 1,9 %, ces pourcentages étant exprimés en poids sec par rapport au poids sec de la composition, et
- une viscosité, déterminée selon un test A, au plus égale à 1600 mPa·s, de préférence comprise entre 5 et 1500 mPa·s.

Le test A, utilisé pour mesurer la viscosité de ladite composition est applicable quelle que soit la forme de présentation de celle-ci, liquide, pâteuse ou solide.

Il consiste à mesurer, par toute méthode classique à la portée de l'homme de l'art, la matière sèche (MS) de ladite composition et selon le cas, à diluer ladite composition avec de l'eau distillée ou à la concentrer par tout moyen approprié non susceptible de modifier significativement le poids moléculaire moyen de la matière amylacée cationique qu'elle contient et ce, de façon à ajuster la MS de ladite composition à une valeur de 20 %.

En suite de quoi, on mesure de manière connue en soi, la viscosité Brookfield à 25°C et à 20 tours/minute de la composition résultante à 20 % de MS.

Selon une variante, la composition amylacée selon l'invention se présente sous forme solide, par exemple d'une poudre s'écoulant librement ou sous forme liquide, par exemple une colle, présentant une MS de 5 à 65 %, de préférence de 10 à 50 %. Cette matière sèche peut avantageusement être supérieure à 15 % et inférieure à 45 %, en particulier être comprise entre 18 et 40 %.

Il convient d'insister sur le fait que la matière sèche de la composition selon l'invention peut être constituée exclusivement ou quasi exclusivement d'au moins une matière amylacée cationique contenant ou non d'autres espèces issues de la cationisation mais également contenir un ou plusieurs autres composants, de préférence choisis parmi les amidons et dérivés de nature anionique ou non ionique, les sucres hydrogénés tels que les hydrolysats d'amidon hydrogénés et le sorbitol, éventuellement cationisés, les produits cationiques d'origine non amylacée, les agents biocides et autres matières actives, papetières ou non.

Selon une variante préférentielle de la présente invention, la composition amylacée présente un taux d'azote fixé compris entre 0,2 et 1,5 % (sec/sec). De manière encore plus avantageuse, ce taux d'azote fixé est compris entre 0,4 et 1,5 % (sec/sec) et tout particulièrement entre 0,5 et 1,5 % (sec/sec).

De façon surprenante et inattendue, notamment en regard des enseignements du brevet EP 626.022 précité, la Société Demanderesse a en effet trouvé que des compositions amylacées présentant un taux d'azote fixé relativement peu élevé, i.e au plus égal à 2 %, de préférence sélectionné entre 0,1 et 1,9 % et notamment entre 0,2 et 1,5 %, associé à des caractéristiques de viscosité également particulières, pouvaient constituer des additifs papetiers très efficaces, en particulier comme agents de réduction des substances gênantes contenues dans les circuits papetiers et/ou retenues sur les équipements des procédés papetiers.

L'un des intérêts de telles compositions amylacées à taux d'azote fixé relativement peu élevé, est de pouvoir être obtenues aisément et efficacement selon une multitude de variantes. L'étape de cationisation peut être menée aussi bien en milieu aqueux comme décrit, par exemple, dans le brevet EP 139.597, qu'en phase sèche comme décrit, par exemple, dans le brevet FR 2.434.821 ou qu'en phase solvant et ce, de façon à permettre à un ou plusieurs groupement(s) azoté (s) de nature électropositive, voire polyélectropositive, de se fixer sur toute matière amylacée contenue dans lesdites compositions.

Il convient d'insister sur le fait que les matières amylacées cationiques utilisables selon l'invention peuvent consister en des produits amphotères, c'est-à-dire en des produits qui sont à la fois cationiques et anioniques. Les substituants anioniques peuvent, à titre d'exemples, être choisis dans le groupe comprenant les groupements phosphates, phosphonates, sulfates, sulfoalkyles, carboxyles, carboxyalkyles et sulfocarboxyles.

Par « matière amylacée » au sens de la présente invention, on entend l'ensemble des amidons, d'origine naturelle ou hybride, y compris ceux issus de mutations ou manipulations génétiques. Lesdits amidons peuvent notamment être issus non seulement de pomme de terre, mais également de pomme de terre à haute teneur en amylopectine (pomme de terre waxy), de maïs, de blé, de blé à haute teneur en amylopectine (blé waxy), de maïs à haute teneur en amylopectine (maïs waxy), de maïs à haute teneur en amylose, de riz, de pois, d'orge ou de manioc, des coupes ou fractions qui peuvent en être faites ou obtenues telles que l'amylose, l'amylopectine, les coupes granulométriques connues de l'homme de l'art sous les vocables d'amidon de blé «A» et amidon de blé «B», et les mélanges quelconques d'au moins deux quelconques des produits susmentionnés, par exemple un mélange d'au moins un amidon de tubercule (fécule de pomme de terre notamment) et d'au moins un amidon de céréale (amidon de blé « A », blé « B », maïs, maïs waxy notamment) ou de deux amidons de céréale. Les composés amylacés utilisables selon l'invention peuvent également consister en des farines ou autres mélanges contenant amidon(s) et protéïne(s) végétale(s), le composant « amidon(s) » étant majoritaire.

Il peut s'agir également de dérivés d'amidon, lesquels peuvent, comme il sera décrit par ailleurs, subir au moins un traitement supplémentaire de modification antérieurement, simultanément ou postérieurement à l'étape de cationisation.

Il peut s'agir notamment de dérivés issus de l'hydrolyse de l'amidon, en particulier de maltodextrines présentant un Dextrose Equivalent (« DE ») au plus égal à 5 environ comme le produit commercialisé sous la dénomination GLUCIDEX® 2 par la Demanderesse, et qui sont alors, dans le cadre de l'invention, cationisés après l'étape d'hydrolyse.

Comme mentionné précédemment, la composition amylacée utilisable selon l'invention présente une viscosité, déterminée selon le test A susdécrit, au plus égale à 1600 mPa.s, de préférence comprise entre 5 et 1500 mPa.s.

De telles viscosités sont remarquablement peu élevées et impliquent généralement un traitement de modification, notamment de dégradation, de la matière amylacée contenue dans ladite composition et ce, comme indiqué, soit antérieurement, soit simultanément, soit postérieurement à l'étape proprement dite de cationisation.

Ce traitement peut être effectué par tout moyen, en particulier chimique, enzymatique et/ou physique, connu de l'homme de l'art et apte à permettre l'obtention directement ou non d'une composition amylacée présentant une viscosité, déterminée selon le test A, telle que revendiquée. Il peut être mené de manière continue ou discontinue, en une ou plusieurs étapes, selon une multitude de variantes quant à la nature, la quantité ou la forme de présentation du moyen de modification, la température et la durée réactionnelles, la teneur en eau du milieu réactionnel, la nature du substrat (matière amylacée déjà cationisée ou non encore cationisée), etc. Il peut s'agir en particulier d'un traitement de fluidification par voie chimique, en milieu aqueux ou en phase sèche, comme ceux mentionnés ou décrits dans le brevet EP 902.037 au nom de la Demanderesse.

Il peut s'agir également, de manière avantageuse, d'un traitement de fluidification enzymatique (également dénommé conversion ou liquéfaction enzymatique), celui-ci pouvant être conduit, par exemple, selon les enseignements du brevet FR 2.149.640 publié par la Demanderesse. Ces moyens enzymatiques incluent des enzymes, thermostables ou non, de type α-amylase d'origine bactérienne, fongique ou autres.

Il peut s'agir également, d'une autre manière avantageuse, d'un traitement permettant de convertir efficacement la matière amylacée cationique, dans un milieu aqueux, au moyen d'enzymes choisies dans le groupe comprenant les enzymes de branchement (EC 2.4.1.18) et les cyclodextrines glycosyltransférases ou « CGTases » (EC 2.4.1.19). Les enzymes de branchement peuvent notamment consister en des enzymes de branchement de l'amidon ou du glycogène, isolées d'algues ou de bactéries, telles que celles dont l'usage est décrit au niveau des brevets WO 00/18893 et WO 00/66633 au nom de la Demanderesse.

La Société Demanderesse a observé que les matières amylacées cationiques traitées, avant, pendant ou après cationisation, par une enzyme de branchement présentaient, d'une manière générale, une stabilité au stockage encore améliorée en regard de celles traitées par une alpha amylase. Sans vouloir être liée par une quelconque théorie, la Demanderesse pense que ce remarquable résultat est dû, au moins en partie, au fait qu'un traitement par enzyme de branchement permet d'obtenir des matières amylacées hydrolysées plus homogènes, i.e notamment dont les saccharides constitutifs résultants ont des masses moléculaires se répartissant sur une courbe de Gauss globalement plus régulière, plus symétrique et plus étroite que celle obtenue avec une alpha amylase. De préférence, le traitement par enzyme de branchement est effectué après l'étape de cationisation et il est d'ailleurs remarquable et surprenant que la présence de groupements cationiques, de taille relativement importante, ne perturbe pas l'action de transfert de chaînes oligo- ou polysaccharidiques de telles enzymes.

L'usage d'enzymes thermostables permet, si on le souhaite, la pratique de liquéfactions enzymatiques à des températures de l'ordre de 90 - 100°C, conditions particulièrement avantageuses pour l'obtention de solutions colloïdales de qualité, notamment en termes de solubilité et de stabilité de la viscosité.

Le traitement de modification peut également, à titre d'exemples non limitatifs, faire appel à une fluidification associant voie acide et enzymatique, à un traitement de dextrinification ou à un traitement de pyroconversion.

L'ensemble des moyens précités sont appliqués à la matière amylacée (déjà cationisée ou non) déjà contenue ou devant être contenue dans la composition selon l'invention, de telle sorte que la masse moléculaire moyenne en poids de ladite matière soit généralement inférieure à $10^7$ daltons, de préférence inférieure à $5 \times 10^6$ daltons.

De manière avantageuse, cette masse moléculaire moyenne en poids est comprise entre $10^4$ et $4 \times 10^6$ daltons.

La Société Demanderesse a en effet constaté que la mise en oeuvre de matières amylacées cationiques dégradées présentant des masses moléculaires situées dans les gammes ci-dessus mentionnées était garante non seulement d'une très bonne efficacité des compositions selon l'invention notamment comme additifs de papeterie autres que des additifs de masse classiques ou de traitement des eaux industrielles mais également d'une très bonne stabilité de celles-ci en termes de comportement lors des opérations de manipulation, de stockage, de transport, de pompage et d'introduction dans/sur les milieux d'application comme par exemple les circuits et équipements papetiers, les émulsions d'agent de collage, les compositions de crêpage, surfaçage ou couchage, les suspensions de minerais ou les eaux destinées à la consommation.

Selon une autre variante de la composition utilisable selon l'invention, celle-ci présente un indice de densité de charge « IDC » supérieur à 600, de préférence supérieur à 650, ledit indice étant déterminé selon la formule ci-après :

$$IDC = \frac{\text{Densité de charge de la composition en } \mu eqv/g}{\text{Taux d'azote total de la composition en \%}}$$

La densité de charge est mesurée sur un détecteur de charges de particules comme décrit ci-après dans l'EXEMPLE 1.

Le taux d'azote total est mesuré selon la méthode KJELDAHL classique et exprimé en sec sur le poids sec de la composition.

L'indice IDC susmentionné reflète l'efficacité avec laquelle des groupements azotés, apportés lors de l'étape de cationisation, se fixent effectivement sur la matière amylacée contenue dans ladite composition et, par là même, en augmente la densité de charge.

La Société Demanderesse a trouvé que des compositions selon l'invention présentant un indice IDC compris entre 660 et 800 pouvait très avantageusement être utilisées comme additifs papetiers ou additifs de traitement des eaux industrielles.

De telles valeurs d'indice IDC sont très significativement supérieures aux valeurs trouvées ou déduites pour les produits de l'art antérieur et qui sont généralement inférieures à 600, voire inférieures à 500, du fait notamment de la présence importante d'espèces azotées non fixées (réactif cationique et ses produits d'hydrolyse) dans ces produits, les rendant par ailleurs non ou peu exploitables dans certaines applications comme le traitement de l'eau potable.

C'est le cas notamment des compositions de la gamme « RAIFIX » précitée mais également de l'amidon hautement cationique exemplifié dans le brevet WO 97/35068 susmentionné et pour lequel il est annoncé un DS de 0,48 soit un taux d'azote fixé théorique de 2,7 % - 2,8 % environ (sec/sec) pour une densité de charge de 1,32 meqv/g soit 1320 $\mu$eqv/g. Un tel produit présente donc un indice IDC d'environ 1320/4, soit d'environ 330.

Le pH de la composition selon l'invention peut atteindre, voire dépasser, la valeur de 10 mais selon une autre variante préférentielle, la composition amylacée conforme à l'invention présente un pH inférieur à 9, de préférence compris entre 4 et 8,5, ledit pH étant mesuré de manière classique et ce, sur une composition dont la MS a été ajustée (si besoin) à une valeur de 20 % comme décrit pour la préparation d'un échantillon selon le test A susmentionné.

Ces gammes de pH distinguent également catégoriquement les compositions revendiquées des produits de l'art antérieur de la gamme « RAIFIX », beaucoup plus alcalins et donc potentiellement plus nocifs et corrosifs tant pour l'homme que pour les équipements. Ces gammes de pH permettent donc également d'envisager des domaines applicatifs autres que ceux réservés, en pratique, aux dits produits de l'art antérieur.

En suite de quoi, on dispose d'un nouveau moyen apte à être utilisé efficacement tant comme additif papetier autre qu'un additif de masse classique que comme additif de traitement des eaux industrielles, en particulier en tant qu'agent de réduction des substances gênantes contenues dans les circuits d'eau et/ou retenues sur les équipements de procédés, papetiers ou non, ou en tant qu'additif dans la préparation des compositions d'agents de collage du papier.

En outre, comme l'a constaté la Demanderesse, ce moyen est particulièrement bien adapté, en particulier :

- en tant qu'additif dans la préparation de compositions de crêpage, surfaçage ou couchage du papier,
- en tant qu'additif dans la préparation de compositions contenant des azurants optiques, des colorants et/ou des polymères synthétiques tels que les polyacrylamides ou les polyvinylamines, lesdites compositions étant elles-mêmes utilisables comme additifs de papeterie autres que des additifs de masses classiques.

Les ratios pondéraux polymère(s) synthétique(s) / matière(s) amylacée(s) cationique(s) peuvent notamment se situer entre 1/100 et 100/1, lesdits ratios étant exprimés en poids secs de polymère(s) synthétique(s) d'une part et de matière(s) amylacée(s) cationique(s) d'autre part.

De manière avantageuse, ce moyen consiste en particulier, comme il sera exemplifié par ailleurs, en une composition amylacée telle que décrite ci-avant et caractérisée en ce qu'elle présente :

- un taux d'azote fixé compris entre 0,4 et 1,5 % (sec/sec), et
- une viscosité, déterminée selon ledit test A, comprise entre 10 et 800 mPa.s.

La Société Demanderesse a notamment trouvé que d'une part, ce taux d'azote pouvait avantageusement se situer entre 0,5 et 1,5 % et en particulier entre 0,6 et 1,5 % et que d'autre part, cette viscosité pouvait avantageusement se situer dans la gamme allant de 50 à 700 mPa.s.

De manière surprenante, elle a observé que des compositions utilisables selon l'invention fluidifiées et présentant, selon le test A, une viscosité comprise dans cette gamme préférentielle, permettaient d'atteindre, en regard de compositions selon l'invention présentant le même taux d'azote fixé mais une viscosité supérieure, une densité de charge plus élevée.

De manière particulièrement avantageuse, les compositions utilisables selon l'invention présentent par ailleurs une matière sèche (MS) supérieure à 15 % et inférieure à 45 %, en particulier comprise entre 18 et 40 %.

Le concept général de la présente invention repose également sur l'utilisation d'une matière amylacée cationique présentant un taux d'azote fixé au plus égal à 2 % et une masse moléculaire moyenne en poids inférieure à $10^7$ daltons pour la préparation d'une composition amylacée conforme à l'une ou l'autre des variantes décrites ci-avant.

De manière avantageuse, ladite matière amylacée cationique a été obtenue par traitement, avant, pendant et/ou après cationisation, de préférence après cationisation, d'une matière amylacée par au moins une enzyme choisie dans le groupe comprenant les enzymes de branchement (EC 2.4.1.18) et les cyclodextrines glycosyltransférases ou « CGTases » (EC 2.4.1.19), thermostables ou non.

Le concept général de la présente invention repose également sur l'utilisation d'une matière amylacée cationique présentant :

- un taux d'azote fixé au plus égal à 2 %,
- une masse moléculaire en poids inférieure à $10^7$ daltons,
- une viscosité, selon le test A, au plus égale à 1600 mPa.s, et
- un indice IDC supérieur à 600,

pour la préparation d'une composition amylacée utile comme additif de papeterie autre qu'un additif de masse classique ou comme additif de traitement des eaux industrielles.

La Société Demanderesse a par ailleurs trouvé que, parmi les compositions amylacées susdécrites, utilisables conformément à l'invention, certaines étaient avantageusement utilisables également dans d'autres domaines d'applications, et notamment en association avec des matières actives utilisables en papeterie de masse comme les agents de collage, les polymère(s) synthétiques(s), les azurant(s) optique(s) et/ou les colorant(s).

De telles associations peuvent se faire au sein d'un même additif de masse ou par mise en oeuvre séparée, simultanée ou non, des composants de telles associations.

Les ratios pondéraux entre polymère(s) synthétique(s) et matière(s) amylacée(s) lors de telles associations peuvent notamment se situer entre 1/100 et 100/1 (sec/sec).

Selon une autre variante, les compositions selon l'invention sont caractérisées par un taux d'azote fixé sélectionné entre 0,5 et 1,5 %, notamment compris entre 0,6 et 1,5 % et une viscosité, déterminée selon le test A, sélectionnée entre 10 et 800 mPa.s, notamment comprise entre 50 et 700 mPa.s.

Les compositions selon l'invention peuvent présenter un pH qui atteint, voire dépasse, la valeur de 10. Cependant, elles présentent de préférence un pH inférieur à 9, en particulier compris entre 4 et 8,5, et un indice de densité de charge IDC supérieur à 600.

A la connaissance de la Demanderesse, de telles compositions ainsi sélectionnées constituent de nouveaux produits dont l'intérêt industriel résulte notamment de leur aptitude à être obtenus par des procédés simples et peu coûteux à partir de toutes matières amylacées et à être utilisés efficacement et en toute innocuité dans toutes les applications, papetières ou non, faisant appel communément aux matières amylacées cationiques (y compris la papeterie de masse et le traitement des eaux), voire à des applications comme par exemple la préparation de compositions contenant des azurants optiques, non connues pour faire appel à de telles matières.

Comme indiqué, lesdites compositions amylacées peuvent, au moment de leur mise en oeuvre, déjà constituer une association, en toutes proportions, entre la matière amylacée cationique hydrolysée et une ou plusieurs matières autres et constituer notamment des additifs de papeterie (de masse ou non) ou de traitement des eaux associant ladite matière amylacée cationique et une matière active choisie dans le groupe comprenant les agents de collage, les azurants optiques, les colorants et les polymères synthétiques.

Par ailleurs et comme l'a constaté la Demanderesse, l'hydrolyse de la matière amylacée cationique peut parfaitement être opérée alors que ladite matière a déjà été mise en présence d'une autre matière active, par exemple, un polyacrylamide, au sein de l'additif.

Selon une autre variante, lesdites compositions amylacées peuvent ne contenir que la matière amylacée cationique hydrolysée en tant que matière active et être associées, par utilisation séparée, simultanée ou non, à un ou plusieurs autres additifs de papeterie (de masse ou non) ou de traitement des eaux contenant d'autres matières actives telles que celles précitées.

A titre d'exemple, une composition amylacée selon l'invention peut être utilisée :

- en association avec une matière active tel qu'un polyacrylamide au sein d'un même additif mis en oeuvre en partie humide (« wet-end ») du procédé papetier,
- en association avec une matière active tel qu'un azurant optique ou un colorant au sein d'un même additif mis en oeuvre en papeterie de masse ou lors d'une opération de surfaçage ou de couchage du papier,
- en association avec un polyacrylamide en vue du traitement d'une eau industrielle, le polyacrylamide étant introduit séparément, simultanément ou non, de ladite composition amylacée,
- en association avec un azurant optique et/ou un colorant, en partie humide du procédé papetier, les matières étant introduites séparément, simultanément ou non, au même endroit du circuit (par ex, au niveau du pulpeur) ou à des endroits différents du circuit (par ex, l'azurant optique au niveau du pulpeur et la composition amylacée en aval de celui-ci).

En suite de quoi, la présente invention a également pour objet l'utilisation d'une composition amylacée telle que décrite ci-avant selon laquelle ladite composition amylacée est associée, simultanément ou non, à au moins une autre matière active choisie de préférence parmi les agents de collage, les azurants optiques, les colorants et les polymères synthétiques, en particulier les polyacrylamides ou les polyvinylamines.

La présente invention va être décrite de façon encore plus détaillée à l'aide des exemples qui suivent et qui ne sont aucunement limitatifs.

EXEMPLE de référence 1

Une poudre de fécule de pomme de terre présentant un taux d'azote total de 1,48 % (sec/sec) et obtenue en phase sèche conformément au brevet FR 2.434.821 précité, est délayée et mise en suspension dans de l'eau déminéralisée froide de telle sorte à obtenir un lait d'amidon cationique à 31 % de matière sèche (« MS »).

Différents échantillons dudit lait sont traités avec des taux variables d'$\alpha$-amylase de type « FUNGAMYL 800 L ». Le traitement de conversion enzymatique est effectué en cuve ouverte par montée de la température de 20 à 95°C en 20 minutes puis un palier de 5 minutes à 95°C, l'objectif étant de pouvoir obtenir des compositions amylacées cationiques présentant une viscosité Brookfield (mesurée à 25°C et à 20 tours/minute) d'environ 300 à 3000 mPa.s et une MS d'environ 20-22 %.

En pratique, les solutions colloïdales obtenues présentent une MS finale de 21,5 %. Pour chacune des solutions obtenues, on mesure, en fonction du taux d'enzyme dégradante mis en oeuvre (exprimé en % / poids sec du lait initial), les caractéristiques ci-après :

- de viscosité Brookfield à 25°C et 20 tours/minute, exprimée en mPa.s, et
- de densité de charge, exprimée en micro équivalent /gramme de poids sec de solution ($\mu$eqv/g) et mesurée sur un détecteur de charges de particules de type « MUTEK PCD02 » associé à un dispositif de titration automatique de type « METTLER DL21 ».

Les résultats obtenus sont repris ci-dessous :

| Taux d'enzyme (%) | Viscosité (mPa.s) | Densité de charge ($\mu$eqv/g) |
|---|---|---|
| 0 | - | 950 |
| 0,010 | 2600 | 980 |
| 0,020 | 800 | 970 |
| 0,025 | 380 | 1006 |
| 0,030 | 320 | 1022 |

De manière surprenante, on note que dans le cas présent d'un amidon cationique de taux d'azote fixé au plus égal à 2 %, en l'occurrence 1,5 % environ, et fluidifié par voie enzymatique en discontinu, la densité de charge tend à augmenter significativement alors que le degré de fluidification augmente. La densité de charge est ici maximale pour les échantillons présentant, à une MS de 21,5 %, une viscosité inférieure à 800 mPa.s et notamment inférieure à 380 mPa.s, ce qui correspondrait à une viscosité inférieure à environ 700 mPa.s et notamment inférieure à environ 330 mPa.s si la MS avait été ajustée à 20 % selon le test A.

La Société Demanderesse a par ailleurs constaté que l'ensemble des compositions à base d'amylacé cationique fluidifié décrites ci-dessus présentaient une remarquable stabilité au stockage, aucun phénomène d'augmentation de viscosité ou de rétrogradation n'étant observé après 17 jours ou 4 mois de stockage à 25°C.

EXEMPLE DE RÉFÉRENCE 2

Dans cet exemple, on effectue une conversion enzymatique en continu de la fécule de pomme de terre cationique à 1,48 % d'azote total décrite dans l'EXEMPLE 1. Pour cela, on réalise un mélange d'enzyme « FUNGAMYL 800 L » et d'eau à raison de 6,7 millilitres de ladite enzyme pour 100 litres d'eau. La fécule cationique est ensuite fluidifiée de manière continue dans les conditions suivantes :

- débit du mélange eau/enzyme : 90 l/h,
- débit de poudre de fécule cationique : 60 kg/h, d'où obtention d'un lait à 40 % de MS environ,
- durée de réaction : 30 minutes,
- température de réaction : 60°C.

L'activité enzymatique est inhibée par passage dans un tube d'inhibition pendant 1 minute 30 secondes à 140°C. Dans ces conditions, des MS finales de l'ordre de 26-30 % sont obtenues qui sont particulièrement avantageuses puisque permettant d'atteindre des viscosités inférieures à 2000 mPa·s et notamment comprises entre 250 et 500 mPa·s.

En outre, dans le cas particulier d'une composition présentant une MS finale de 28 %, on a effectué des prélèvements au cours du temps et mesuré la densité de charge en fonction de la viscosité.

Les résultats obtenus sont repris ci-dessous :

| Viscosité (mPa.s) | Densité de charge ($\mu$eqv/g) |
|---|---|
| 250 | 970 |
| 300 | 975 |
| 375 | 980 |
| 405 | 980 |
| 450 | 950 |
| 500 | 965 |

On remarque que dans le cas présent d'une fluidification enzymatique menée en continu et d'une gamme de viscosités (250-500 mPa.s à 28 % MS) correspondant globalement à une fluidification moyenne, il n'y a pas corrélation entre viscosité et densité de charge.

En tout état de cause, dans le cadre de cet exemple, il apparaît qu'en regard des valeurs de densité de charge obtenues, des viscosités de 300 à 400 mPa.s environ sont particulièrement avantageuses.

La dilution de telles compositions aux fins d'en ajuster la MS à une valeur de 20 % conformément au test A sus décrit, donne alors des viscosités préférentielles inférieures à 150 mPa.s et notamment de l'ordre de 100 à 130 mPa.s.

EXEMPLE DE RÉFÉRENCE 3

Dans le cadre de cet exemple, on effectue la cationisation d'un dérivé d'amidon, en l'occurrence de la maltodextrine GLUCIDEX® 2 issu d'amidon de maïs waxy et commercialisée par la Demanderesse. On réalise une solution aqueuse à 50 % de MS de ce dérivé, laquelle est portée à une température de 70-80°C. On y ajoute ensuite respectivement 40 % de réactif cationique de type TMAEP tel que décrit dans le brevet FR 2.434.821 précité, et 1,5 % de soude, ces pourcentages étant exprimés en poids sec/poids sec de maltodextrine.

Après réaction (5 heures à 50°C) et neutralisation à un pH de 6,7, on obtient une composition amylacée présentant une MS de 49 % et dont la viscosité, mesurée après ajustement de la MS à 20 % conformément au test A, est de 40 mPa.s environ.

La matière amylacée cationique contenue dans ladite composition présente un taux d'azote fixé de 1,8 % (sec/sec), ce qui indique un rendement de fixation du réactif cationique de l'ordre de 83 % compte tenu du taux d'azote total (2,16 %) apporté par le réactif de cationisation.

EXEMPLE 4

Dans cet exemple, on compare les caractéristiques de compositions amylacées selon l'invention telles que décrites ci-avant en regard de celles mesurées sur une composition amylacée cationique commercialisée sous l'appellation « RAIFIX 120 » en vue de son utilisation comme agent de réduction des matières gênantes présentes dans les circuits papetiers et désignée ci-après « COMPOSITION T ». Les compositions conformes à l'invention, désignées ci-après COMPOSITIONS 1, 2 et 3, résultent respectivement des EXEMPLES 1, 2 et 3 précédents.

Les caractéristiques mesurées concernent la matière sèche (« MS » en %), le pH, le taux d'azote total (« N TOTAL » en % sec/sec), le taux d'azote fixé (« N FIXE » en % sec/sec), la viscosité Brookfield mesurée à 20 % de MS, à 25°C et 20 tr/min selon le test A (« VISCOSITE » en mPa.s), la masse moléculaire moyenne en poids de la matière amylacée cationique contenue dans la composition (« MM » en millions de daltons ou $10^6$ d, déterminée par chromatographie d'exclusion stérique couplée à un détecteur de diffusion de la lumière), la densité de charge (« DC » en $\mu$eqv/g) et l'indice IDC correspondant au rapport DC/N TOTAL.

On obtient les résultats ci-après :

|  | COMPOSITION | | | |
|---|---|---|---|---|
|  | T | 1 | 2 | 3 |
| MS | 19,9 | 21,5 | 28 | 49 |
| PH | 11,0 | 5,8 | 5,8 | 7,3 |
| N TOTAL | 4,6 | 1,5 | 1,5 | 2,2 |
| N FIXE | 2,5 | 1,2 | 1,2 | 1,8 |
| VISCOSITE | 2600 | 220 | 100 | 40 |
| MM | 22,3 | 1,5 | 3,0 | 0,3 |
| DC | 2250 | 1022 | 980 | 1300 |
| IDC | 489 | 690 | 662 | 722 |

Il en résulte globalement que les COMPOSITIONS selon l'invention, lesquelles contiennent une matière amylacée à la fois significativement moins cationisée et plus fluidifiée que celle contenue dans la COMPOSITION T selon l'art antérieur, présentent un indice IDC élevé, nettement supérieur à celui de ladite COMPOSITION T.

Ces valeurs élevées d'indice IDC, supérieures à 600, voire même à 650, traduisent une meilleure fixation de l'azote apporté par l'étape de cationisation et par là même une présence réduite de résidus azotés et salins au sein desdites COMPOSITIONS 1 à 3.

EXEMPLE 5

La COMPOSITION T (non conforme à l'invention) et les COMPOSITIONS 2 et 3 décrites ci-avant (conformes à l'invention), sont testées comparativement en tant qu'agents de réduction des substances gênantes, anioniques ou non (collectivement désignées « pitchs » ci-après), susceptibles d'être contenues dans les circuits d'eau (et/ou retenues sur les équipements), papetiers ou non.

Dans le cas présent, le milieu d'application consiste en une pâte à papier constituée globalement, en poids, d'environ 80 % de pâtes chimiques vierges (mélange de feuillus et résineux) et 20 % de cassés de production Elle présente une concentration d'environ 10 g/kg, une conductivité d'environ 1400 $\mu$S/cm, un potentiel Zéta de - 13,4 mV, un pH de 7,7 et une densité de charge, mesurée sur le surnageant passé sur filtre de 140 $\mu$m, de 85 $\mu$eq/l.

Les COMPOSITIONS T, 2 et 3, dont la MS a été ajustée à 20 %, sont introduites dans ladite pâte à raison de 0,3 % (sec/sec). Le temps de contact entre chacune des COMPOSITIONS et la pâte est de 5 minutes, sous agitation de 1000 tr/min.

Un essai est mené en l'absence de toute composition amylacée. La numération des « pitchs » se fait classiquement sur cellule de THOMAS à partir des « eaux sous toile » récupérées suite au traitement précité et passées sur filtre de 30 $\mu$m.

Les résultats obtenus de Potentiel Zéta (« POTENTIEL » en mV), de densité de charge (« SCD » en $\mu$eq/1) et nombre de « pitchs » (« PITCHS » en milliers ou $10^3/mm^3$ d'eau sous toile filtrée) sont repris ci-après :

|  | POTENTIEL | SCD | PITCHS |
|---|---|---|---|
| SANS COMPOSITION | - 13,4 | 85 | 49,6 |

(suite)

| | POTENTIEL | SCD | PITCHS |
|---|---|---|---|
| COMPOSITION T | - 3,9 | 19 | 13,6 |
| COMPOSITION 2 | - 8,3 | 62 | 13,2 |
| COMPOSITION 3 | - 6,2 | 48 | 16 |

Ces résultats montrent que des COMPOSITIONS selon l'invention, bien que présentant un taux d'azote relativement faible, sont parfaitement efficaces comme agents de réduction des « pitchs ». Elles sont globalement aussi efficaces que la COMPOSITION T, laquelle est cependant plus difficile à préparer et très significativement plus cationisée et donc plus coûteuse et beaucoup plus chargée en résidus divers.

La COMPOSITION 2, en particulier, est remarquablement adaptée à cette application. La Demanderesse a par ailleurs observé qu'elle pouvait être également utilisée comme agent de floculation de boues biologiques et/ou minérales issues de stations d'épuration ou agent de clarification des eaux de machine à papier.

EXEMPLE 6

Dans le cadre de cet exemple, on étudie les propriétés émulsifiantes de la COMPOSITION 2 selon l'invention se présentant sous forme de colle à 27 % de MS. A 100 g de ladite colle, contenant donc 27 g au total de matière amylacée cationique, on ajoute 13,5 g de l'agent de collage « FIBRAN 76 » à base d'anhydride alcénylsuccinique (« ASA »).

La composition de collage obtenue, laquelle présente un rapport pondéral matière amylacée (poids sec) / agent de collage de 2/1, est ensuite soumise à un traitement important de cisaillement, à savoir une homogénéisation 5 minutes à 20.000 tours / minute.

L'émulsion ainsi obtenue est ensuite diluée, sans agitation, avec de l'eau de forage dans une fiole jaugée de 1 litre de façon à obtenir une émulsion de « FIBRAN 76 » à 1,35 % d'agent de collage (« EMULSION 1 »), une partie de l'EMULSION 1 étant rediluée, dans les mêmes conditions, aux fins d'obtenir une émulsion à 0,3 % d'agent de collage (« EMULSION 2 »).

Des observations menées périodiquement pendant une durée de 54 heures montrent que les EMULSIONS 1 et 2 ainsi obtenues restent parfaitement stables et homogènes.

EXEMPLE DE RÉFÉRENCE 7

Dans le cadre de cet exemple, on prépare un additif conforme à l'invention en traitant un amidon cationique par une enzyme de branchement du glycogène telle que décrite au niveau de l'EXEMPLE 4 du brevet WO 00/66633 précité.

On prépare à cette fin une solution d'enzyme diluée en apportant 150 millilitres de ladite enzyme dans 2 litres d'eau déminéralisée, eau dont la température est préalablement amenée puis maintenue à 30°C et le pH compris entre 7 et 8.

On introduit alors, par saupoudrage lent, dans ladite solution d'enzyme diluée, de la fécule de pomme de terre identique à celle utilisée dans l'EXEMPLE 1, i.e présentant un taux d'azote total de 1,5 % environ (sec/sec) et un taux d'azote fixé de 1,2 % environ (sec/sec).

Cette opération est menée de façon à ce que l'introduction la plus régulière possible permette d'obtenir une solution colloïdale de ladite fécule de pomme de terre cationique d'une concentration comprise entre 110 et 120 g/l sans gonflement ni dépense d'énergie nécessaire à l'agitation excessifs.

Pendant cette phase de préparation, la température est soigneusement maintenue à 30°C, le pH dans une gamme comprise entre 6 et 8, de préférence 6,5 à 7.

Dans ces conditions, la transformation est poursuivie pendant 4 heures.

Elle est interrompue par désactivation de l'enzyme consistant en un maintien à 95°C pendant 15 minutes.

En pratique, la solution colloïdale obtenue au terme de l'ensemble de ces opérations présente une MS finale de 10 % et les caractéristiques ci-après :

- Viscosité Brookfield : 50 mPa.s (25°C-20 t/min)
- Densité de charge (DC) : 922 $\mu$eqv/g
- IDC : 615
- Masse moléculaire moyenne en poids (MM) : $3,2 \times 10^6$ daltons environ.

On note que dans le cas présent d'une transformation enzymatique par enzyme de branchement, la viscosité relativement faible obtenue, laquelle donnerait une valeur significativement inférieure à 300 mPa.s selon le test A, est compatible avec le maintien d'une masse moléculaire en poids relativement élevée, i.e supérieure à 2 x 10⁶ daltons.

La composition amylacée obtenue présente, en tant que telle ou après concentration à une MS de 21,5 % environ, une stabilité au stockage encore supérieure à celle observée pour les compositions résultant de l'EXEMPLE 1.

EXEMPLE 8

Dans le cadre de cet exemple, on prépare une composition amylacée dans les mêmes conditions que celles décrites dans l'EXEMPLE 7, si ce n'est que :

  1) La fécule de pomme de terre présente un taux d'azote total de 1,1 % environ (sec/sec) et un taux d'azote fixé de 1,0 % environ (sec/sec).
  2) La transformation par l'enzyme de branchement est menée pendant 45 minutes (au lieu de 4 heures), et
  3) La MS finale de la solution colloïdale obtenue est de 16,3 % (au lieu de 10 %).

La composition amylacée ainsi obtenue présente les caractéristiques suivantes :

- Viscosité Brookfield : 625 mPa.s
- Densité de charge (DC) : 716 $\mu$eqv/g
- IDC : 650
- Masse moléculaire moyenne en poids (MM) : 2,5 x 10⁶ daltons environ.

Elle présente une remarquable stabilité au stockage.

En outre, la Société Demanderesse a vérifié que ladite composition pouvait tout à fait convenir en tant qu'agent de réduction des matières gênantes présentes dans les circuits papetiers puisque, dans les conditions de test décrites dans l'EXEMPLE 5 ci-avant, ladite composition a permis d'obtenir des effets comparables à ceux observés avec les COMPOSITIONS 2 ou 3, en l'occurrence un potentiel Zéta de - 6,4 mV, une valeur de densité de charge (SCD) de 65 $\mu$eq/l et un nombre de « pitchs » de 16,4 x 10³ / mm³ d'eau sous toile filtrée.

EXEMPLE 9

Dans le cadre de cet exemple, on étudie l'intérêt d'une composition amylacée conforme à l'invention dans le cadre de son association avec un azurant optique et, éventuellement, des colorants.

La composition amylacée conforme à l'invention a été obtenue par conversion enzymatique, par alpha-amylase, d'une fécule de pomme de terre cationique présentant un taux d'azote total de 1,65 % environ et un taux d'azote fixé de 1,5 % environ.

Elle se présente sous la forme d'une colle dont les principales caractéristiques sont les suivantes :

- Matière sèche (MS) : 27,9 %
- Viscosité Brookfield : 450 mPa.s (25°C - 20 t/min)
- Densité de charge : 1056 $\mu$eqv/g
- IDC : 640 environ

Dans le cas présent, les matières actives sont introduites dans la masse d'une pâte à papier constituée pondéralement d'environ :

- 20 % de pâte kraft de résineux
- 60 % de pâte kraft de feuillus, et
- 20 % de cassés

Avant introduction de ladite pâte dans un dispositif de désintégration, on introduit successivement dans l'eau de remplissage dudit dispositif :

  a) soit une composition amylacée cationique décrite ci-dessus soit un polyacrylamide cationique et ce, en quantité équivalente à la MS de ladite composition amylacée puis,
  b) un azurant optique et ce, en quantité égale à environ 5 fois la quantité de produit cationique mis en oeuvre en a) puis, éventuellement, un mélange de colorants et ce, en quantité égale à environ 2,5 fois la quantité de produit cationique mis en oeuvre en a).

Après introduction de la pâte et désintégration de celle-ci pendant 30 minutes, on confectionne des feuilles présentant un grammage de 80 g/m$^2$ environ à l'aide du matériel « TECHPAP ».

On effectue essentiellement sur celles-ci des mesures de blancheur et de fluorescence.

Les résultats obtenus ont montré globalement que la composition amylacée conforme à l'invention, contenant une matière amylacée cationique convertie enzymatiquement, permet d'atteindre une efficacité de l'azurant optique au moins aussi élevée, généralement supérieure, à celle obtenue avec le polymère cationique synthétique et ce, tant en présence qu'en absence de matières colorantes.

EXEMPLE 10

Dans le cadre de cet exemple, on étudie l'intérêt de compositions amylacées, conformes ou non à la présente invention, dans le domaine du traitement des eaux et ce, dans le cadre d'associations avec un coagulant synthétique, en l'occurrence le polyacrylamide cationique « PERFORM PA 9430 » commercialisé par HERCULES.

Pour les ESSAIS A, B et C, on teste ledit polyacrylamide en association avec une colle amylacée à base respectivement :

- ESSAI A : d'une fécule de pomme de terre cationique à 0,64 % d'azote fixé environ (sec/sec), non hydrolysée et donc non conforme à la présente invention,
- ESSAI B : d'une fécule de pomme de terre cationique à 1,5 % d'azote fixé environ (sec/sec), hydrolysée par alpha amylase conformément à l'invention, ou
- ESSAI C : d'une fécule de pomme de terre cationique (azote fixé: 1,5 % environ en sec/sec), hydrolysée par enzyme de branchement conformément à l'invention.

On réalise en outre un essai témoin (« ESSAI T ») pour lequel ledit polyacrylamide n'est pas associé à une composition amylacée.

Pour l'ensemble de ces essais, on traite un effluent de papeterie présentant un taux de matières en suspension de l'ordre de 1,6 g/l.

L'échantillon d'effluent prélevé est immédiatement mis sous agitation. On réalise ensuite la succession d'étapes ci-après :

- A t = 1 minute : introduction (ESSAIS A à C) ou non (ESSAI T) de la composition amylacée dans l'effluent agité et ce, avec un taux d'introduction de 0,03 °/°° (sec/sec),
- A t = 6 minutes : introduction du coagulant synthétique (ESSAIS T et A à C) et ce, à raison de 0,001 °/°°, exprimé en poids commercial / poids sec de l'effluent,
- A t = 7 minutes : arrêt de l'agitation,
- de t = 7 minutes à t = 9 minutes : observation de la décantation,
- A partir de t = 12 minutes : mesures de la matière sèche du surnageant (« MSS » en g/l) et de la densité optique du surnageant (« DO »).

On obtient les résultats ci-après pour les ESSAIS T et A, non conformes à l'invention et ESSAIS B et C, conformes à l'invention.

|         | MSS g/l | DO  |
|---------|---------|-----|
| ESSAI T | 0,335   | 4,6 |
| ESSAI A | 0,304   | 5,0 |
| ESSAI B | 0,244   | 4,4 |
| ESSAI C | 0,216   | 4,3 |

Ces résultats montrent globalement que les compositions amylacées conformes à l'invention peuvent être avantageusement utilisées dans le traitement des eaux, notamment en association avec un polymère synthétique tel qu'un polyacrylamide cationique (cf ESSAIS B et C).

Ces compositions amylacées permettent d'améliorer très significativement l'épuration d'effluents en réduisant la matière sèche et la densité optique du surnageant et ce, de manière beaucoup plus importante que ce qui peut être obtenu avec une composition amylacée non conforme à l'invention (cf ESSAI A).

La composition amylacée testée dans l'ESSAI C, à base de matière amylacée cationique convertie par une enzyme de branchement, apparaît comme particulièrement performante en association avec un polyacrylamide cationique.

EXEMPLE 11

Dans le cadre de cet exemple, on associe au sein d'un même additif, utilisable en papeterie (de masse ou non) ou en traitement des eaux, une matière amylacée cationique hydrolysée conformément à l'invention et un polyacrylamide cationique tel que le produit « PRAESTOL 853 BC » commercialisé sous forme poudre par STOCKHAUSEN.
Une telle association peut avantageusement se faire, comme dans le cas présent, par mise en présence l'une de l'autre de la matière amylacée et de la matière synthétique dès avant l'étape de conversion visant à hydrolyser la matière amylacée cationique.
On réalise un lait d'amidon à 30 % de MS à partir de la même poudre de fécule de pomme de terre cationique que celle utilisée dans l'EXEMPLE 1. On ajoute alors à la suspension 5 % dudit polyacrylamide cationique, ce pourcentage étant exprimé en poids de polyacrylamide commercial sur le poids d'amidon sec.
On ajoute ensuite 0,15°/°° d'alpha amylase de type « FUNGAMYL 800 L », exprimé en poids de produit commercial par rapport au poids sec d'amidon.
Le traitement de conversion enzymatique est alors effectué en cuve ouverte par montée de la température de 20 à 95°C en 20 minutes avec de la vapeur vive puis un palier de 5 minutes à 95°C en vue d'inhiber l'enzyme.
On ajuste ensuite la MS de la composition obtenue à une valeur de 22 % environ.
La composition amylacée obtenue, associant matière amylacée cationique hydrolysée et polyacrylamide cationique, présente les principales caractéristiques suivantes :

- MS : 22,2 %
- Viscosité Brookfield : 1500 mPa·s (25°C - 20 t/min)
- Densité de charge : 1040 $\mu$eqv/g

On remarque que la viscosité de cette composition est augmentée en regard de celle obtenue, en absence de polymère synthétique, avec 0,15°/°° d'alpha amylase selon l'EXEMPLE 1.
Cependant cette viscosité est conforme à l'objectif fixé, à savoir au plus égale à 1600 mPa.s (selon le test A).
En outre, des observations faites par la Demanderesse montrent que cette composition reste stable, même après un stockage de 25 jours à 25°C, et que la matière amylacée cationique hydrolysée qu'elle contient est parfaitement solubilisée.

**Revendications**

1. Utilisation d'une composition amylacée comme additif de papeterie choisi parmi les additifs utilisés comme agent de réduction des substances gênantes contenues dans les circuits d'eau et/ou retenues sur les équipements de procédés papetiers ; dans la préparation des compositions d'agents de collage utilisées en papeterie, notamment comme agent de protection desdits agents ; dans la préparation de compositions de crêpage, de surfaçage ou de couchage du papier ; dans la préparation de compositions contenant des azurants optiques, des colorants et/ou des polymères synthétiques, notamment des polyacrylamides ou des polyvinylamines ; ou comme additif destiné au traitement des eaux industrielles ;
   ladite composition amylacée contenant au moins une matière amylacée cationique, **caractérisée en ce que** ladite composition présente conjointement:

   - un taux d'azote fixé au plus égal à 2%, de préférence compris entre 0,1 et 1,9%, ces pourcentages étant exprimés en poids sec de composition, et
   - une viscosité au plus égale à 1600 mPa.s, de préférence comprise entre 5 et 1500 mPa.s, déterminée selon un test A, ledit test A correspondant à la mesure de la viscosité d'une composition à 20% de matières sèches, sur viscosimètre Brookfield à 25°C et sous une vitesse de broche de 20 tours par minute.

2. Utilisation selon la revendication 1 **caractérisée en ce que** la composition amylacée présente un taux d'azote fixé compris entre 0,2 et 1,5 %.

3. Utilisation selon l'une des revendications 1 ou 2, **caractérisée en ce que** la matière amylacée cationique présente une masse moléculaire moyenne en poids inférieure à $10^7$ daltons, de préférence inférieure à $5 \times 10^6$ daltons.

**4.** Utilisation selon la revendication 3, **caractérisée en ce que** la matière amylacée cationique présente une masse moléculaire moyenne en poids comprise entre $10^4$ et $4 \times 10^6$ daltons.

**5.** Utilisation selon l'une quelconque des revendications 1 à 4, **caractérisée en ce que** la composition amylacée présente un indice de densité de charge IDC, défini par le rapport de la Densité de charge de la composition en $\mu$eqv/g au Taux d'azote total de la composition en %, supérieur à 600, de préférence supérieur à 650.

**6.** Utilisation selon la revendication 5, **caractérisée en ce que** la composition amylacée présente un indice IDC compris entre 660 et 800.

**7.** Utilisation selon l'une quelconque des revendications 1 à 6, **caractérisée en ce que** la composition amylacée présente un pH inférieur à 9, de préférence compris entre 4 et 8,5.

**8.** Utilisation selon l'une quelconque des revendications 1 à 7, **caractérisée en ce que** la composition amylacée présente :

- un taux d'azote fixé compris entre 0,4 et 1,5 %, et
- une viscosité, déterminée selon un test A, comprise entre 10 et 800 mPa.s.

**9.** Utilisation selon la revendication 8, **caractérisée en ce que** la composition amylacée présente :

- un taux d'azote fixé compris entre 0,5 et 1,5 %, et
- une viscosité comprise entre 50 et 700 mPa.s.

**10.** Utilisation selon l'une quelconque des revendications 1 à 9, **caractérisée en ce que** la composition amylacée présente une matière sèche supérieure à 15 % et inférieure à 45 %, de préférence comprise entre 18 et 40 %.

**11.** Utilisation d'une matière amylacée cationique présentant un taux d'azote fixé au plus égal à 2 % et une masse moléculaire moyenne en poids inférieure à $10^7$ daltons pour la préparation d'une composition amylacée utilisée selon l'une quelconque des revendications 1 à 10.

**12.** Utilisation selon la revendication 11, **caractérisé en ce que** la matière amylacée cationique a été obtenue par traitement d'une matière amylacée, avant, pendant et/ou après sa cationisation, de préférence après sa cationisation, par au moins une enzyme choisie dans le groupe comprenant les enzymes de branchement (EC 2.4.1.18) et les cyclodextrines glycosyltransférases (EC 2.4.1.19), thermostables ou non.

**13.** Utilisation d'une composition amylacée selon l'une quelconque des revendications 1 à 10 ou préparée selon l'une des revendications 11 ou 12 comme additif de papeterie choisi parmi les additifs utilisés comme agent de réduction des substances gênantes contenues dans les circuits d'eau et/ou retenues sur les équipements de procédés papetiers ; dans la préparation des compositions d'agents de collage utilisées en papeterie, notamment comme agent de protection desdits agents ; dans la préparation de compositions de crêpage, de surfaçage ou de couchage du papier ; dans la préparation de compositions contenant des azurants optiques, des colorants et/ou des polymères synthétiques, notamment des polyacrylamides ou des polyvinylamines ; ou comme additif destins au traitement des eaux industrielles.

**Claims**

**1.** Use of a starchy composition as an additive for paper-making selected from the additives used as an agent for reducing inconvenient substances contained in water circuits and/or retained on paper-making process equipment, as an additive in the preparation of sizing agent compositions used in paper-making, in particular as agent for protecting said agents, as additive in the preparation of compositions for creping, surfacing or coating paper, as additive in the preparation of compositions containing optical brighteners, colorants and/or synthetic polymers, in particular polyacrylamides or polyvinylamines, or as an additive for the treatment of industrial waste water, said starchy composition containing at least one cationic starchy material, **characterized in that** said composition has :

- a fixed nitrogen level at most equal to 2 %, preferably comprised between 0.1 and 1.9 %, these percentages being expressed relative to the dry weight of the composition, and

- a viscosity at most equal to 1600 mPa.s, preferably between 5 and 1500 mPa.s, said viscosity being determined according to a test A, said test A corresponding to measuring the viscosity of a composition having a dry matter content of 20 %, with a Brookfield viscosimeter at 25 °C and at 20 rpm.

2. Use as claimed in claim 1, **characterized in that** the starchy composition has a fixed nitrogen level of between 0.2 and 1.5 %.

3. Use as claimed in either of claims 1 or 2, **characterized in that** the cationic starchy material has a weight average molecular weight of less than $10^7$ daltons, preferably less than $5 \times 10^6$ daltons.

4. Use as claimed in claim 3, **characterized in that** the cationic starchy material has a weight average molecular weight of between $10^4$ and $4 \times 10^6$ daltons.

5. Use as claimed in any of claims 1 to 4, **characterized in that** the starchy composition has a charge density index (CDI), defined by the percentage of the charge density expressed in mequv/g relative to the total nitrogen level of the composition, greater than 600, preferably greater than, 650.

6. Use as claimed in claim 5, **characterized in that** the starchy composition has a CDI value of between 660 and 800.

7. Use as claimed in either of claims 1 to 6, **characterized in that** the cationic starchy composition has a pH of less than 9, preferably of between 4 and 8.5.

8. Use as claimed in any of claims 1 to 7, **characterized in that** the starchy composition has

   - a fixed nitrogen level of between 0.4 and 1.5 %, and
   - a viscosity, determined according to a test A, of between 10 and 800 mPa.s.

9. Use as claimed in claim 8, **characterized in that** the starchy composition has :

   - a fixed nitrogen level of between 0.5 and 1.5 %, and
   - a viscosity, determined according to a test A, of between 50 and 700 mPa.s.

10. Use as claimed in any one of claims 1 to 9, **characterized in that** the starchy composition has a dry matter content greater than 15 % and less than 45 %, preferably of between 18 and 40 %.

11. Use of a cationic starchy material having a fixed nitrogen level at most equal to 2 % and a weight average molecular weight of less than $10^7$ daltons for the preparation of a starchy composition used as claimed in any one of claims 1 to 10.

12. Use as claimed in claim 11, **characterized in that** the cationic starch material was obtained by treating a starchy material, before, during and/or after its cationization, preferably after its cationization, with at least one enzyme chosen from the group comprising branching enzymes (EC 2.4.1.18) and cyclodextrin glycosyltransferases (EC 2.4.1.19), which are thermostable or not thermostable.

13. Use of a starchy composition as claimed in any one of claims 1 to 10 or prepared as claimed in any one of claims 11 and 12, as an additive for paper-making selected from the additives used as an agent for reducing inconvenient substances contained in water circuits and/or retained on paper-making process equipment, as an additive in the preparation of sizing agent compositions used in paper-making, in particular as agent for protecting said agents, as additive in the preparation of compositions for creping, surfacing or coating paper, as additive in the preparation of compositions containing optical brighteners, colorants and/or synthetic polymers, in particular polyacrylamides or polyvinylamines, or as an additive for the treatment of industrial waste water.

**Patentansprüche**

1. Verwendung einer stärkehaltigen Zusammensetzung als Papierherstellungs-Zusatzstoff, der aus den Zusatzstoffen ausgewählt ist, die als Mittel zur Reduktion von störenden Substanzen, die in den Wasserkreisläufen enthalten sind und/oder in den Anlagen für Papierherstellungsverfahren zurückgehalten werden; bei der Herstellung von Leimungsmittel-Zusammensetzungen, die in der Papierindustrie verwendet werden, insbesondere als Schutzmittel der Leimungsmittel; bei der Herstellung von Zusammensetzungen zum Kreppen, Oberflächenbehandeln oder Streichen von Papier; bei der Herstellung von Zusammensetzungen, die optische Aufheller, Farbstoffe und/oder synthetische Polymere, insbesondere Polyacrylamide oder Polyvinylamine, enthalten; oder als Zusatzstoff, der für die Behandlung von Brauchwässern bestimmt ist;
wobei die stärkehaltige Zusammensetzung mindestens einen kationischen stärkehaltigen Stoff enthält, **dadurch gekennzeichnet, dass** die Zusammensetzung miteinander verbunden aufweist:

- einen Prozentgehalt an gebundenem Stickstoff von höchstens gleich 2 %, vorzugsweise im Bereich zwischen 0,1 und 1,9 %, wobei diese Prozentsätze auf das Trockengewicht der Zusammensetzung bezogen sind, und
- eine Viskosität von höchstens gleich 1600 mPa·s, vorzugsweise im Bereich zwischen 5 und 1500 mPa·s, ermittelt gemäß einem Test A, wobei der Test A dem Messen der Viskosität einer Zusammensetzung mit 20 % Trockensubstanz mit einem Brookfield-Viskosimeter bei 25 °C und einer Spindeldrehzahl von 20 Umdrehungen pro Minute entspricht.

2. Verwendung nach Anspruch 1, **dadurch gekennzeichnet, dass** die stärkehaltige Zusammensetzung einen Prozentgehalt an gebundenem Stickstoff im Bereich zwischen 0,2 und 1,5 % aufweist.

3. Verwendung nach einem der Ansprüche 1 oder 2, **dadurch gekennzeichnet, dass** der kationische stärkehaltige Stoff eine mittlere relative Molekülmasse von weniger als $10^7$ Dalton, vorzugsweise von weniger als $5 \times 10^6$ Dalton aufweist.

4. Verwendung nach Anspruch 3, **dadurch gekennzeichnet, dass** der kationische stärkehaltige Stoff eine mittlere relative Molekülmasse im Bereich zwischen $10^4$ und $4 \times 10^6$ Dalton aufweist.

5. Verwendung nach einem der Ansprüche 1 bis 4, **dadurch gekennzeichnet, dass** die stärkehaltige Zusammensetzung einen Ladungsdichteindex LDI, definiert als das Verhältnis der Ladungsdichte der Zusammensetzung in μeqv/g zum Gesamtstickstoffgehalt der Zusammensetzung in %, von über 600, vorzugsweise von über 650, aufweist.

6. Verwendung nach Anspruch 5, **dadurch gekennzeichnet, dass** die stärkehaltige Zusammensetzung einen LDI im Bereich zwischen 660 und 800 aufweist.

7. Verwendung nach einem der Ansprüche 1 bis 6, **dadurch gekennzeichnet, dass** die stärkehaltige Zusammensetzung einen pH-Wert unter 9, vorzugsweise im Bereich zwischen 4 und 8,5 aufweist.

8. Verwendung nach einem der Ansprüche 1 bis 7, **dadurch gekennzeichnet, dass** die stärkehaltige Zusammensetzung aufweist:

- einen Prozentgehalt an gebundenem Stickstoff im Bereich zwischen 0,4 und 1,5 %
und
- eine Viskosität, bestimmt gemäß einem Test A, im Bereich zwischen 10 und 800 mPa·s.

9. Verwendung nach Anspruch 8, **dadurch gekennzeichnet, dass** die stärkehaltige Zusammensetzung aufweist:

- einen Prozentgehalt an gebundenem Stickstoff im Bereich zwischen 0,5 und 1,5 %
und
- eine Viskosität im Bereich zwischen 50 und 700 mPa·s.

10. Verwendung nach einem der Ansprüche 1 bis 9, **dadurch gekennzeichnet, dass** die stärkehaltige Zusammensetzung eine Trockenmasse von mehr als 15 % und weniger als 45 %, vorzugsweise im Bereich zwischen 18 und 40 %, aufweist.

11. Verwendung eines kationischen stärkehaltigen Stoffes, der einen Prozentgehalt an gebundenem Stickstoff von höchstens gleich 2 % und eine mittlere relative Molekülmasse von weniger als $10^7$ Dalton aufweist, für die Herstellung einer stärkehaltigen Zusammensetzung, die nach einem der Ansprüche 1 bis 10 verwendet wird.

12. Verwendung nach Anspruch 11, **dadurch gekennzeichnet, dass** der kationische stärkehaltige Stoff durch Behandeln eines stärkehaltigen Stoffes vor, während und/oder nach seiner Kationisation, vorzugsweise nach seiner Kationisation, mit mindestens einem Enzym, das aus der Gruppe ausgewählt ist, welche die Verzweigungsenzyme (EC 2.4.1.18) und die Cyclodextrin-Glycosyltransferasen (EC 2.4.1.19), die thermostabil sind oder nicht, umfasst, erhalten worden ist.

**13.** Verwendung einer stärkehaltigen Zusammensetzung nach einem der Ansprüche 1 bis 10 oder hergestellt nach einem der Ansprüche 11 oder 12 als Papierherstellungs-Zusatzstoff, der aus den Zusatzstoffen ausgewählt ist, die als Mittel zur Reduktion von störenden Substanzen, die in den Wasserkreisläufen enthalten sind und/oder in den Anlagen für Papierherstellungsverfahren zurückgehalten werden; bei der Herstellung von Leimungsmittel-Zusammensetzungen, die in der Papierindustrie verwendet werden, insbesondere als Schutzmittel der Leimungsmittel; bei der Herstellung von Zusammensetzungen zum Kreppen, Oberflächenbehandeln oder Streichen von Papier; bei der Herstellung von Zusammensetzungen, die optische Aufheller, Farbstoffe und/oder synthetische Polymere, insbesondere Polyacrylamide oder Polyvinylamine, enthalten; oder als Zusatzstoff, der für die Behandlung von Brauchwässern bestimmt ist.